Europäisches Patentamt

(19) European Patent Office

Office européen des brevets

(11) Publication number: 0 189 631
A1

# (12) EUROPEAN PATENT APPLICATION

(21) Application number: 85306838.5

(22) Date of filing: 26.09.85

(51) Int. Cl.⁴: C 08 G 59/42
C 09 J 3/16, C 08 K 5/09
C 08 K 5/15

(30) Priority: 15.10.84 US 660750

(43) Date of publication of application:
06.08.86 Bulletin 86/32

(84) Designated Contracting States:
AT BE CH DE FR GB IT LI LU NL SE

(71) Applicant: EPOXY TECHNOLOGY, INC.
14 Fortune Drive P.O. Box 567
Billerica Massachusetts 01821(US)

(72) Inventor: Banfield, Charles E.
16 Biscayne Parkway
Nashua New Hamshire(US)

(74) Representative: Harvey, David Gareth et al,
Graham Watt & Co. Riverhead
Sevenoaks Kent TN13 2BN(GB)

(54) Methods and compositions for removal of moisture.

(57) Methods and compositions are disclosed which entail the use of epoxy resins for absorbing moisture when moisture constraints are present. The moisture absorbing compositions include a curable epoxy resin, a curing agent, and an anhydride of a carboxylic acid, the latter in one instance being present in an amount sufficient both to cure the resin and to absorb the moisture. Alternatively, the anhydride moisture absorber is employed with a separate curing agent for the resin. Methods of protecting moisture-sensitive articles employ such compositions as adhesives or coatings, and the invention has particular utility in electronic device packaging.

- 1 -

## "METHODS AND COMPOSITIONS FOR REMOVAL OF MOISTURE"

The present invention relates to methods and compositions for removal of moisture.

More particularly, this invention concerns methods and compositions for removing moisture through chemical reaction and especially from environments containing epoxy adhesives.

Entrapped moisture is a major concern in many industrial and commercial products because of the damaging effects it can have on operating systems or delicate components. For example, manufacturers of electronic parts and packages often must take expensive and time-consuming steps to hermetically seal moisture out of their products. High temperatures and vacuums or dry nitrogen atmospheres are often employed to exclude or remove moisture prior to sealing the electronic packages. Eutectic bonding systems are generally used rather than polymeric adhesive systems within sealed packages to avoid the reintroduction of moisture. The acceptable moisture level for many electronic devices can be as low as 5,000 or even 2,000 parts per million (ppm). However, even when hermetic sealing steps are taken, it is often difficult to maintain these standards.

Eutectic bonding typically involves the use of a two phase, e.g., gold and silicon, conductive solder to join an electronic chip, die or other component to its packaging in a moisture-free fashion. Regrettably, the materials that form eutectic solders are expensive and the bond coverage they provide is often less than the full area on which the chip or die component overlies its substrate. This disparity in coverage is a source for stress development that can distort and damage the circuitry. Moreover, the high temperature necessary to induce eutectic bonding, i.e., $400^{\circ}C$ to $500^{\circ}C$, imposes restrictions on component selection and adds to processing time and costs.

Until now epoxy adhesives have not been considered suitable for use within sealed electronic packages where moisture constraints are present. One reason is that the epoxy compositions themselves often contain moisture which is expelled into the sealed package during the life of the component. Moisture constraints are particularly troublesome for epoxy-containing packages when the finished product in service is exposed to elevated temperatures, e.g. $150^{\circ}C$ to $250^{\circ}C$, for extended periods of time.

There accordingly exists a need for better methods and compositions for maintaining substantially moisture-free environments for industrial and commercial products, particularly electronic packages. Adhesives that are inexpensive, provide high adhesive coverage and do not release moisture would satisfy a long-felt need in industry, particularly if they could be applied at lower temperatures than eutectic solders and maintain package moisture levels below 5000 ppm.

It has been discovered that moisture-absorbing adhesives can be formed by the addition of carboxylic acid anhydrides to epoxy compositions, and this discovery forms the basis of this invention.

According to one aspect of the present invention, there is provided a method for absorbing moisture from an environment surrounding an article, comprising the steps of

A. mixing a curable epoxy resin with a quantity of a curing agent sufficient for curing said resin and an effective amount of an anhydride of a carboxylic acid for absorbing moisture, and

B. applying the mixture of resin, curing agent and anhydride to the article.

Applicable to the field of electronic device manufacture, the invention provides a method for fabricating electronic devices in substantially moisture-free packages, comprising the steps of

A. securing the device within the package with a moisture-absorbing epoxy composition comprising a curable epoxy resin, a curing agent and anhydride of a carboxylic acid, and

B. sealing the package.

The invention further provides a moisture-absorbing composition comprising

A. a curable epoxy resin,

B. a quantity of a curing agent sufficient for curing the epoxy resin, and

C. a quantity of an anhydride of a carboxylic acid chosen from aliphatic, carbocyclic and heterocyclic carboxylic acids and substituted derivatives thereof, for absorbing moisture. The anhydride content can be increased with the object of it serving the dual role of absorbing moisture and of curing the resin.

According to another aspect of the invention, there is provided a hardener composition for use with a curable epoxy resin, the hardener composition comprising a quantity of curing agent sufficient for curing the epoxy resin and a quantity of an anhydride of a carboxylic acid sufficient for absorbing moisture.

The invention will now be explained in more detail in the non-limiting, exemplary description which now follows.

Adhesives according to the invention, suitable for sealing components within electronic packages and the like, include a curable epoxy resin and a carboxylic acid anhydride. The anhydride can serve as a curing agent for the epoxy resin, when it is present in an amount greater than necessary for curing the resin. The excess anhydride reacts with unwanted moisture. A separate curing agent can be used to achieve resin curing, while the anhydride added absorbs moisture from the finished product, but it will be understood that the anhydride component can both serve to cure and remove moisture and then it is present in an amount sufficient to accomplish both these functions.

Anhydrides useful in practising the present invention are formed by the condensation of carboxylic acid molecules and the consequent elimination of water. The linkage of the carboxylic groups in an anhydride is relatively weak and the anhydride readily separates into the more stable acid molecules in the presence of moisture. Hence, the anhydride component in the present epoxy composition, which is not exhausted in initial resin curing, serves as a moisture absorber in the finished composition. Additionally, the carboxylic acid which forms from the anhydride, when moisture is absorbed, can further react with any remaining resin that has not been cross-lined or cured and, thereby, prevent the absorbed moisture from being released again if the acid-anhydride equilibrium conditions change.

Suitable anhydrides for practice of this invention include anhydrides of aliphatic, carbocyclic and heterocyclic carboxylic acids and substituted derivatives thereof. The anhydrides of monocarboxylic acids and anhydrides of polycarboxylic molecules containing more than one carboxyl (-COOH) group can be employed.

Examples of suitable aliphatic anhydrides include, without limitation, anhydrides of formic, acetic, propionic, butyric, valeric and other aliphatic carboxylic acids. Examples of carbocyclic anhydrides include, without limitation, anhydrides of benzoic, phthalic (including tetra and hexahydro structures) and mellitic acids. An example of heterocyclic anhydrides, without limitation, is furoic acid. Polycarboxylic acid anhydrides include, without limitation, anhydrides of maleic, succinic, nadic and trimellitic acids. Substituted derivatives include, without limitation, chloro, methyl and cyano-derivatives, such as anhydrides of methyl tetrahydrophthalic, tetrachlorophthalic and methyl nadic acids.

The curable epoxy resins which can be used in the practice of this invention include, but are not restricted to, any of those materials currently available in the art. Typical epoxy resins suitable for the present invention are disclosed in U.S. Patents 2,324,483; 2,500,600; and 2,965,607, the disclosures of which are expressly incorporated herein by reference. The more common types of epoxy resins are the reaction products of epichlorhydrin and 2,2-di (p-hydroxyphenyl) propane (Bisphenol A), the glycidyl ethers of mononuclear di- and trihydroxy phenols (resorcinol, hydroquinone, pyrocatechol, sligenin and phologlucinol), the glycidyl ethers of other polyhydroxy phenols (Bisphenol F, trihydroxyldiphenyl dimethyl methane, 4,4'-dihydroxy biphenyl, tetracis (hydroxyphenyl) ethane, long-chain bisphenols, dihydroxy diphenyl sulfone, and Novolacs), the glycidyl ethers of polyalcohols (ethylene glycol, 1,4-butanediol, glycerol, erythritol and polyglycols), and the epoxylated cyclic and straight chain olefins (vinyl cyclohexene, dicyclohexene carboxylate, and polybutadienes).

These and many other epoxy resins are available commercially, for example, under the trade marks or names "Epon Resins" from the Shell Chemicals Company, "Araldite Resins" from the Ciba-Geigy Company, "DER and DEN Resins" from the Dow Chemical Company and "Unox Epoxides" from Union Carbide Chemicals Company.

In certain embodiments of the invention, it is preferred to employ a curing agent to induce the epoxidation reaction independently, without exhausting the moisture absorbing anhydride component in curing the resin. Suitable independent curing agents include primary and secondary aliphatic polyamines; metal halides, such as aluminum chloride, zinc chloride, ferric chloride, and boron trifluoride as well as complexes of metal halides with ethers, amines, acid anhydrides, or ketones; diazonium salts; phosphoric acid and partial esters thereof including n-butyl orthophosphate, diethyl orthophosphate and hexaethyl tetraphosphate; amino compounds, such as triethylamine, ethylene diamine, diethylamine, diethylene triamine, triethylene tetraamine, dicyandiamide, melamine, and salts of inorganic acids, such as zinc fluroborate, potassium persulfate, nickel fluroborate, and magnesium perchlorate. One particularly useful independent curing agent is boron trifluoride monoethylamine ($BF_3MEA$).

The moisture-gettering anhydride component can be compounded with the curing agent and other epoxidation catalysts into a compound hardener, which is used in the same fashion as conventional hardeners. The hardener and resin are packaged separately and mixed just prior to use. These same resins and hardeners can also be chilled or frozen. Preferably the anhydride will form 15-75 percent by weight of the hardener and most preferably about 40-60 percent.

Alternatively, the moisture-gettering anhydride may be used in an excess to serve both to cure the resin and to absorb moisture from the epoxy-sealed article during use. Examples of anhydrides that can serve both as a curing agent (hardener) and as a moisture absorber include, without limitation, phthalic, mellitic and diaryl acid anhydrides generally and methyl tetrahydrophthalic acid anhydride, in particular.

The invention will now be described in connection with certain preferred embodiments. However, it should be clear that various changes and modifications can be made without departing from the spirit or scope of the invention. For example, although silver is used as a conductive filler in the following examples, other conductive materials such as gold, copper, palladium, carbon, graphite, nickel, or platinum can also be used. Moreover, other fillers, such as aluminum oxide $(Al_2O_3)$, can be added to epoxy compositions of the present invention to form epoxy adhesives with dielectric properties, and where electrical or thermal conductive properties are not important to the user, fillers can be omitted entirely. Additionally, various solvents may be employed as carriers for either the hardener or the resin component of the present invention, as desired.

While the materials of the present invention are particularly useful as adhesives, it should also be apparent that they may be used as coatings or otherwise generally disposed in environments where moisture control is warranted.

The following non-limiting Examples illustrate specific practices of the invention:

A series of moisture-absorbing epoxy compositions was prepared and used as adhesives. In each instance, a bisphenol epoxy resin (a diglycidyl ether of bisphenol A having an equivalent weight of about 170 to about 200) was used as the curable epoxy resin. Various carboxylic acid anhydrides were employed in the epoxy compositions as moisture absorbers. In Examples I and II an acetic acid anhydride was used as the moisture absorber. The composition of Example III employed propionic acid anhydride and in Example IV butyric acid anhydride was used. Methyl tetrahydrophthalic acid (MTHPA) anhydride served as the moisture absorbing anhydride in Example V.

In each of the examples, except Example V, boron trifluoride monoethylamine (BF$_3$MEA) was used as the curing agent. In Example V, the MTHPA anhydride served as the curing agent and an excess amount thereof served as the moisture absorber. Examples II-V also included a conductive filler of silver flakes.

The adhesives were used to bond various materials together and were heat cured by prebaking at 120°C for one-half hour and further baking at 180°C for at least an additional one-half hour. Adhesive bonds were obtained in each instance having excellent integrity and the adhesives were capable of absorbing moisture from the surrounding environment. Table I below summarizes the various components and proportions (in parts by weight) of each of the exemplary compositions.

TABLE I

MOISTURE ABSORBING EPOXY COMPOSITIONS

| Example | Type of Anhydride | Composition: Parts by Weight | | | |
|---|---|---|---|---|---|
| | | Resin | $BF_3MEA$ | Anhydride | Filler |
| I | Acetic Acid | 100 | 3 | 6.6 | -- |
| II | Acetic Acid | 100 | 3 | 6.6 | 262 |
| III | Propionic Acid | 100 | 3 | 8.4 | 262 |
| IV | Butyric Acid | 100 | 3 | 10.3 | 262 |
| V | MTHPA | 100 | 3 | 10.9 | 262 |

The acetic acid anhydride composition of Example II was further tested in a hermetically sealed "header" package process. Semiconductor circuit dice were bonded into the packages with the conductive moisture absorbing epoxy using two alternative cure schedules. In Schedule A, the epoxy was cured by prebaking for 30 minutes at $120^{\circ}C$ followed by baking for 30 minutes more at $180^{\circ}C$. In Schedule B, the epoxy was also prebaked at $120^{\circ}C$ for 30 minutes but was then further baked for 2 hours at $180^{\circ}C$. In each instance, the curing was conducted in vacuum. The packages (without lids) were then vacuum baked for 90 minutes at $200^{\circ}C$. The vacuum was released under dry nitrogen and the lid was welded onto the package in a nitrogen atmosphere. Drying was completed by heating the sealed package for 24 hours at $150^{\circ}C$.

The moisture levels within the header packages were monitored over a period of 6 weeks at two test temperatures, 150°C and 250°C. The results are summarized in Table II below:

## TABLE II

### MOISTURE LEVELS WITHIN HERMETICALLY SEALED HEADER PACKAGES EMPLOYING MOISTURE-ABSORBING EPOXY COMPOSITIONS

| Conditions and Time Period Monitored | MOISTURE (ppm) | |
|---|---|---|
| | Cure Schedule A | Cure Schedule B |
| Post Seal | 632 | 460 |
| 150°C/1 day | 198 | 591 |
| 150°C/7 days | 233 | 267 |
| 150°C/21 days | 299 | 271 |
| 150°C/42 days | 519 | 512 |
| 250°C/7 days | 377 | 202 |
| 250°C/42 days | 734 | 260 |

The results in Table II show that longer curing schedules appear to have little advantage when the epoxy compositions are stored at temperatures up to 150°C. However, in higher temperature environments (i.e. 250°C) a longer cure schedule appears to be preferred. In all instances the moisture levels detected with the epoxy compositions of the present invention were well below the limits set by industrial and military standards.

The composition of Example II also was tested in a hermetically sealed "sidebraze" package process.
Semiconductor circuit dice were bonded into the
packages with the conductive moisture-absorbing epoxy
using a cure schedule of 120°C for 30 minutes followed
by 180°C for two hours. Curing was conducted with
and without a vacuum in separate experiments. The
package was sealed by brazing a metallic gasket
material between the lid and package in a conveyorized
sealing oven blanketed with dry nitrogen. Peak
temperature exposure was 315°C for three to four
minutes. Oven dwell time was approxiamtely twenty-
three minutes.

To determine how well the epoxy composition
absorbed any retained moisture, sidebraze package
outgassing of moisture was determined. Outgassing
of moisture immediately after sealing was measured
at about 1440 ppm for packages containing dice cured
under vacuum and 2171 ppm for packages where the
die adhesive was cured without a vacuum. After
twenty-four hours, moisture outgassing for the
vacuum-cured die packages dropped to 558 ppm and for the
non-vacuum cured adhesives dropped to 774 ppm.

Having described various embodiments of the
invention, modifications, additions and subtractions
will be apparent and are intended to be covered by the
following claims.

Claims:

1.  A method for absorbing moisture from an environment surrounding an article, comprising the steps of

A.  mixing a curable epoxy resin with a quantity of a curing agent sufficient for curing said resin and an effective amount of an anhydride of a carboxylic acid for absorbing moisture, and

B.  applying the mixture of resin, curing agent and anhydride to the article.

2.  The method according to claim 1, wherein the epoxy resin is chosen from ethers of polyhydroxyphenols, eithers of polyalcohols and epoxylated cyclic and straight-chain olefins.

3.  The method according to claim 1 or claim 2, wherein the anhydride is chosen from aliphatic, carbocylic and heterocyclic carboxylic acids and substituted derivatives thereof.

4.  The method according to claim 3, wherein the anhydride is chosen from formic, acetic, propionic, butyric, valeric, benzoic, phthalic, mellitic, furoic, maleic, succinic, nadic and trimellitic acid anhydrides and substituted derivatives thereof such as the chloro, methyl and cyano-derivatives.

5. The method according to any of claims 1 to 4, wherein the curing agent is chosen from primary and secondary aliphatic polyamines, metal halides, organo-metallic halide complexes, phosphoric acid and partial esters thereof, diazonium salts, amino compounds and salts of inorganic acids.

6. The method according to any of claims 1 to 4, wherein the curing agent is a quantity of anhydride more than sufficient to cure the resin, the excess anhydride serving to absorb unwanted moisture.

7. A method for fabricating electronic devices in substantially moisture-free packages, comprising the steps of

A. securing the device within the package with a moisture-absorbing epoxy composition comprising a curable epoxy resin, a curing agent and anhydride of a carboxylic acid, and

B. sealing the package.

8. The method according to claim 7, wherein the epoxy resin is chosen from ethers of polyhydroxyphenols, ethers of polyalcohols, epoxylated cyclic and straight-line olefins.

9. The method according to claim 7 or claim 8, wherein the anhydride is an anhydride of a carboxylic acid chosen from aliphatic, carbocyclic and heterocyclic carboxylic acids and substituted derivatives thereof, for example formic, acetic, propionic, butyric, valeric, benzoic, phthalic, mellitic, maleic, succinic, nadic and trimellitic acid anhydrides and substituted derivatives thereof.

10. The method according to claim 9, wherein the anhydride is a methyl tetrahydrophthalic acid anhydride.

11. The method according to any of claims 7 to 10, wherein the curing agent is either an anhydride of a carboxylic acid or is chosen from primary and secondary aliphatic polyamines, metal halides, organo-metallic complexes, phosphoric acid and partial esters thereof, diazonium salts, amino compounds and salts of inorganic acids, for example boron trifluoride monoethylamine.

12. A moisture-absorbing composition comprising

A. a curable epoxy resin,

B. a quantity of a curing agent sufficient for curing the epoxy resin, and

C. A quantity of an anhydride of a carboxylic acid chosen from aliphatic, carbocyclic and heterocyclic carboxylic acids and substituted derivatives thereof, for absorbing moisture.

13. The composition according to claim 12, wherein the epoxy resin is chosen from ethers of polyhydroxyphenols, ethers of polyalcohols and epoxylated cyclic and straight-chain olefins, the curing agent is chosen from primary and secondary aliphatic polyamines, metal halides, organo-metallic halide complexes, phosphoric acid and partial esters thereof, diazonium salts, amino compounds and salts of inorganic acids, and the moisture abosrbing anhydride is chosen from formic, acetic, propionic, butyric, benzoic, phthalic, mellitic, furoic, maleic, succinic, nadic and trimellitic acid anhydrides and substituted derivatives thereof.

14. The composition according to claim 13, wherein the anhydride is a methyl tetrahydrophthalic acid anhydride or boron trifluoride monoethylamine.

15. A hardener composition for use with a curable epoxy resin, the hardener composition comprising a quantity of curing agent sufficient for curing the epoxy resin and a quantity of an anhydride of a carboxylic acid sufficient for absorbing moisture.

16. The hardener composition according to claim 15, wherein the curing agent is chosen from primary and secondary aliphatic polyamines, metal halides, organo-metallic complexes, phosphoric acid and partial esters thereof, diazonium salts, amino compounds and salts of inorganic acids, and for example is boron trifluoride monoethylamine.

17. The hardener composition according to claim 15 or claim 16, wherein the anhydride is chosen from aliphatic, carbocyclic and heterocyclic carboxylic acids and substituted derivatives thereof, and for example is an anhydride of acetic, propionic, butyric or methyl tetrahydrophthalic acids or derivatives of these acids.

18. The hardener composition according to claim 15 or claim 16, wherein the anhydride component, in the absence of other additives, comprises from about 25 to about 75 percent by weight, for example from about 40 to about 60 percent by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 143 485 (A. KRÜGER)<br>* Page 4, claim *<br><br>--- | 1 | C 08 G 59/42<br>C 09 J 3/16<br>C 08 K 5/09<br>C 08 K 5/15 |
| A | US-A-3 954 712 (G. LOTTANTI et al.)<br><br>----- | | |

| | TECHNICAL FIELDS SEARCHED (Int. Cl.4) |
|---|---|
| | C 09 J<br>C 08 G<br>C 08 K |

The present search report has been drawn up for all claims

| Place of search | Date of completion of the search | Examiner |
|---|---|---|
| THE HAGUE | 20-02-1986 | STIENON P.M.E. |